(19) Europäisches Patentamt
European Patent Office
Office européen des brevets

(11) **EP 1 530 281 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(51) Int Cl.:
***H02K 29/03*** *(2006.01)*

(21) Anmeldenummer: **04020696.3**

(22) Anmeldetag: **01.09.2004**

(54) **Elektromotor**

Electric motor

Moteur électrique

(84) Benannte Vertragsstaaten:
**AT BE BG CH CY CZ DE DK EE ES FI FR GB GR HU IE IT LI LU MC NL PL PT RO SE SI SK TR**

(30) Priorität: **05.11.2003 DE 20317021 U**

(43) Veröffentlichungstag der Anmeldung:
**11.05.2005 Patentblatt 2005/19**

(73) Patentinhaber: **ebm-papst St. Georgen GmbH & Co. KG**
**78112 St. Georgen (DE)**

(72) Erfinder: **Iles-Klumpner, Dorin**
**78112 St. Georgen (DE)**

(74) Vertreter: **Raible, Hans et al**
**Raible & Raible**
**Patentanwälte**
**Schoderstrasse 10**
**70192 Stuttgart (DE)**

(56) Entgegenhaltungen:
**EP-A- 1 289 101       WO-A-03/081748**
**US-A- 6 008 559        US-A1- 2002 171 309**
**US-A1- 2003 178 905    US-B1- 6 218 753**

**Beschreibung**

Die Erfindung betrifft einen Elektromotor, der bevorzugt als Innenläufermotor ausgebildet ist.

Derartige Motoren, bevorzugt mit elektronischer Kommutierung, werden wegen ihres niedrigen axialen Trägheitsmoments dort für Antriebsaufgaben verwendet, wo ein Elektromotor mit seiner Drehzahl elektrischen Befehlen sehr schnell folgen muss, z.B. zur schnellen Verstellung von Teilen, oder zur Servounterstützung von Bewegungen. Dabei wünscht man, dass ein solcher Motor ein sehr gleichförmiges Drehmoment abgeben soll. Dies erreicht man gewöhnlich durch eine dreiphasige Ausführung des Motors, wobei jeder der Phasen ein im wesentlichen sinusförmiger Strom eingeprägt wird, und wobei der Motor so ausgebildet ist, dass in den Phasen ("Strängen") der mehrphasigen Statorwicklung sinusförmige Spannungen induziert werden. Einen solchen Motor bezeichnet man auch als Sinusmotor.

Bei solchen Motoren ergibt sich das Phänomen, dass die Grenzen zwischen den einzelnen Rotorpolen, die sogenannten Polgrenzen, die Stellen größten Luftspalts suchen. Für den Betrachter hat es deshalb den Anschein, als würden die Polgrenzen von den Nuten des Stators angezogen. Diesen Effekt bezeichnet man auf Englisch als "cogging", auf Deutsch als "Nutrucken". Das dabei entstehende Drehmoment bezeichnet man als Haltemoment oder Rastmoment (cogging torque), weil es bestrebt ist, den Rotor in bestimmten Drehstellungen festzuhalten bzw. "einzurasten".

Dieser Effekt wird erzeugt durch ein sogenanntes Reluktanzmoment, d.h. bei der Drehung des Rotors relativ zum Stator wird im magnetischen Kreis des Motors in bestimmten Drehwinkelbereichen magnetische Energie gespeichert, und in anderen Drehwinkelbereichen wird diese magnetische Energie freigegeben, ähnlich, wie wenn man eine Feder abwechselnd spannen und entspannen würde. Zum Speichern muss dem Rotor Energie zugeführt werden. d.h. der Rotor wird dadurch gebremst, und umgekehrt wird dort, wo gespeicherte Energie freigegeben wird, der Rotor angetrieben Dreht man den Rotor eines solchen Motors von Hand, so hat man den Eindruck, dass man "jede Nut spürt".

Dieses Reluktanzmoment ist bei vielen Antriebsaufgaben störend, so dass man dort gezwungen ist, eisenlose Statorwicklungen zu verwenden, bei denen kein Reluktanzmoment auftritt, doch ist die Leistung solcher Motoren mit eisenlosem Stator meist nicht ausreichend, weil ihr Luftspalt sehr groß ist. Dies führt zu einem hohen Leistungsgewicht, d.h. das Verhältnis von Motorleistung zu Motorvolumen, bzw. von Motorleistung zu Motorgewicht, ist bei ihnen ungünstig.

Man hat versucht, diesem Problem dadurch beizukommen, dass man den Polschuhen des Rotors eine bestimmte Form gibt, doch führt das zu einer Bauweise, bei der das Leistungsgewicht nicht günstig ist.

Aus der US 2002/0 171 309 A1 kennt man eine permanentmagnetisch erregte elektrische Maschine, bei der im Blechpaket eines Innenrotors Magnete eingebettet sind. Diese Magnete werden in dafür vorgesehene Taschen des Blechpakets eingeschoben. Diese Taschen erstrecken sich in Umfangsrichtung etwas weiter als die in ihnen angeordneten Magnete, um zu verhindern, dass der von den Dauermagneten erzeugte Magnetfluss durch das Blechpaket des Rotors direkt kurzgeschlossen wird. Auf diese Weise sollen das Nutrucken und Drehmomentpulsationen verringert werden.

Es ist deshalb eine Aufgabe der Erfindung, einen neuen Elektromotor bereit zu stellen.

Nach der Erfindung wird das erreicht durch den Gegenstand des Anspruchs 1. Man erhält so einen mehrsträngigen Elektromotor, bei dem man im Rotor Magnete verwenden kann, deren Winkelerstreckung nicht viel kleiner ist als eine Polteilung des Rotors, und bei dem man trotzdem eine induzierte Spannung mit guter Sinusform und ein noch akzeptables Haltemoment erhält. Dies ermöglicht es, das Leistungsgewicht solcher Motoren zu verbessern, d.h. für die gleiche Leistung benötigt man einen kleineren und damit leichteren Motor als bisher.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispielen, und aus den übrigen Unteransprüchen. Es zeigt:

Fig. 1    einen Längs-schnitt durch eine bevorzugte Ausführungsform eines Motors nach der Erfindung,

Fig. 2    einen Schnitt, gesehen längs der Linie II-II der Fig. 1, in einem gegenüber Fig. 1 vergrößerten Maßstab,

Fig. 3    eine Ausschnittsvergrößerung aus Fig. 2 in einem nochmals vergrößerten Maßstab,

Fig. 4    eine Darstellung analog Fig. 3, bei welcher der Verlauf der magnetischen Flusslinien für eine bestimmte Rotorstellung dargestellt ist, um die Erzeugung einer sinusförmigen induzierten Spannung zu erläutern,

Fig. 5    eine Darstellung analog Fig. 3, nämlich die Darstellung eines Ausschnitts aus einem symmetrischen Rotorblech, und

Fig. 6    eine Darstellung analog Fig. 3 und 5, nämlich eine Darstellung eines Rotorblechs (Ausschnitt), bei dem die Pole leicht asymmetrisch ausgebildet sind.

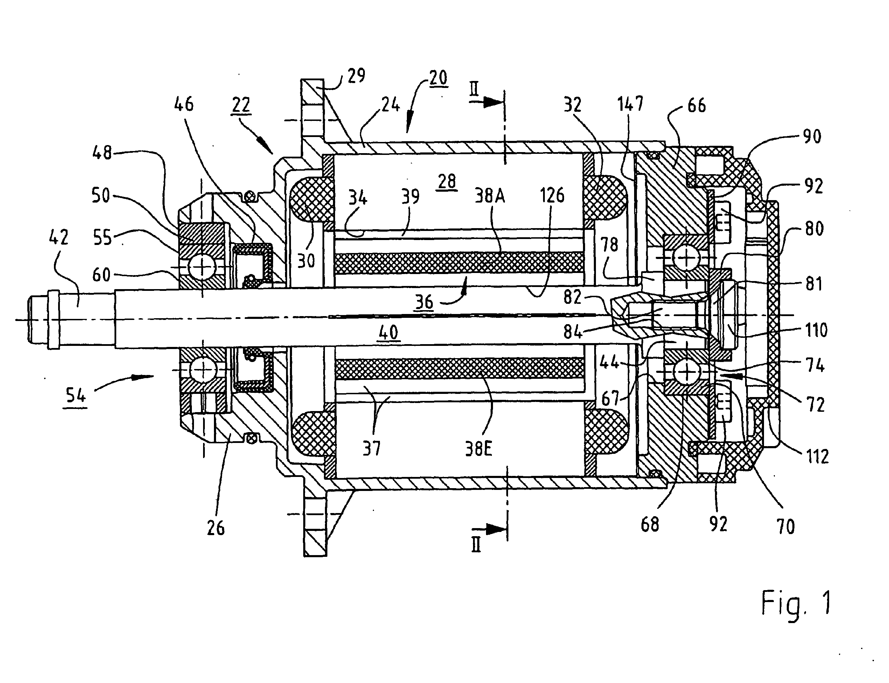

**Fig. 1** zeigt einen elektronisch kommutierten, dreiphasigen Innenläufermotor 20 mit einem Gehäuse 22, das ein zylindrisches Gehäuseteil 24, ein A-Lagerschild 26 und einen Befestigungsflansch 29 aufweist.

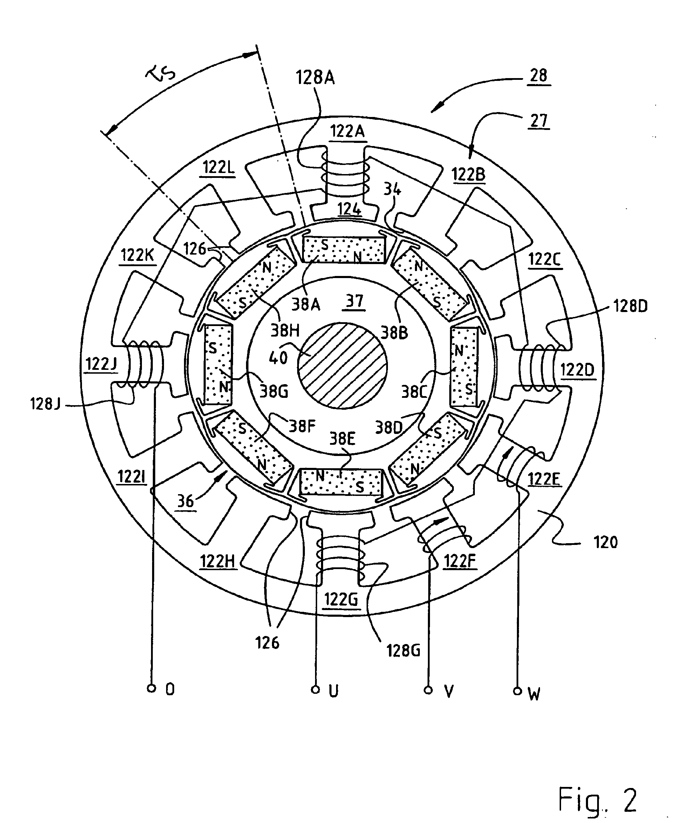

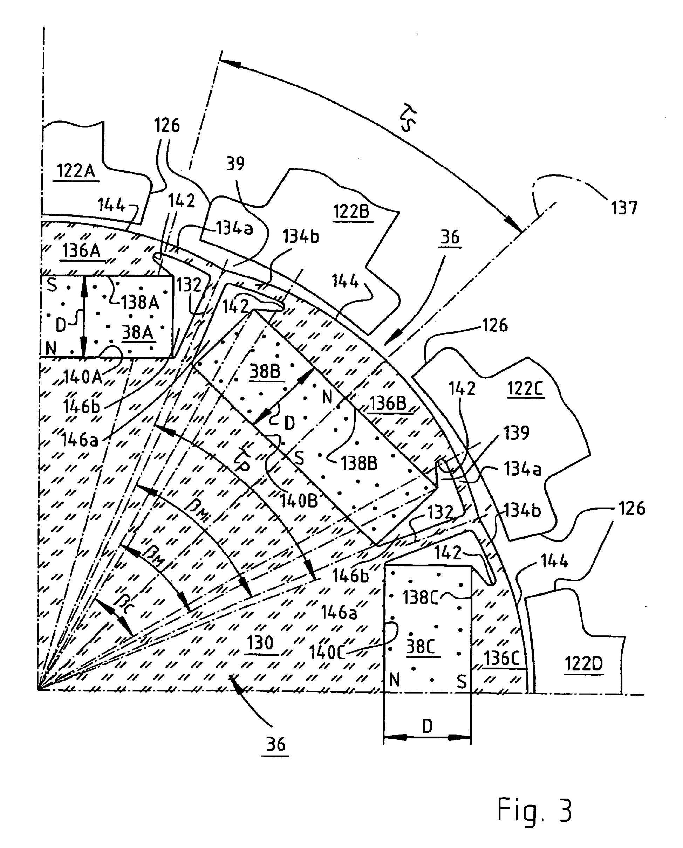

In dem zylindrischen Gehäuseteil 24 ist ein Blechpaket 27 (Fig. 2) eines Außenstators 28 angeordnet, dessen Wickelköpfe bei 30 und 32 angedeutet sind. Der Stator 28 hat eine Innenausnehmung 34, in der ein achtpoliger Innenrotor 36 mit einem Blechpaket 37 aus Elektroblech (DIN 46400, Blatt 1), bevorzugt Blech V400, und mit insgesamt acht Permanentmagneten 38A bis 38H (vgl. Fig. 2 und 3) auf einer Welle 40 angeordnet ist, deren Antriebsende mit 42 und deren inneres Wellenende mit 44 bezeichnet sind. Ein Luftspalt 39 trennt den Stator 28 vom Rotor 36. Ein solcher Motor 20 kann in verschiedener Weise bezeichnet werden, z.B. als permanent erregte Synchron-Innenläufermaschine oder als elektronisch kommutierter Sinusmotor, oder als dreiphasiger Motor mit eingeprägten sinusförmigen Strömen.

Im A-Lagerschild 26 ist in üblicher Weise eine Dichtung 46 für die Welle 40 vorgesehen. Ferner befindet sich dort eine Ausnehmung 48, in der ein Führungsglied 50 für den Außenring 55 eines Wälzlagers 54 befestigt ist. Der Innenring 60 des Wälzlagers 54 ist auf die Welle 40 aufgepresst.

Im offenen Ende des zylindrischen Gehäuseteils 24 ist ein B-Lagerschild 66 befestigt. Dieses hat eine mit einer Ringschulter 67 versehene Ausnehmung 68 für den Außenring 70 eines Wälzlagers 72, dessen Innenring 74 auf dem Wellenende 44 befestigt ist. Hierzu hat die Welle 40 einen Ringbund 78, mit dem sie gegen die linke Seite des Innenrings 74 anliegt. Gegen seine rechte Seite liegt ein Formstück 80 aus Messing an, das durch den Senkkopf 81 einer Senkkopfschraube 82 in Richtung zur Welle 40 gepresst wird und etwa ringförmig ausgebildet ist. Die Schraube 82 ist in ein Innengewinde 84 des Wellenendes 44 eingeschraubt und presst dadurch das Formstück 80 in Richtung zum Innenring 74.

Zum sicheren Einspannen des Außenrings 70 dient ein flaches, ringförmiges Teil 90, das durch drei gleichmäßig verteilte Schrauben 92 an seiner Peripherie am Lagerschild 66 befestigt ist und das mit seinem radial inneren Teil gegen den Außenring 70 anliegt und diesen nach links gegen die Schulter 67 presst. (Die Ausnehmung 68 ist etwas kürzer als der Außenring 70).

Nachdem das Formstück 80 mittels der Innensechskant-Schraube 82 am Wellenende 44 befestigt worden ist, wird in einer zylindrischen Ausnehmung des Formstücks 80 ein Steuermagnet 110 befestigt, z.B. durch Kleben. Der Steuermagnet 110 ist auf seiner in Fig. 1 rechten Seite mit einem Magnetisierungsmuster versehen und dient zur Steuerung von (nicht dargestellten) magnetoresistiven Widerständen, die an einem Gehäusedeckel 112 auf der B-Seite des Motors 20 angeordnet sind und zur Erfassung der Drehstellung des Rotors 36 dienen, um Form und Kommutierung der Ströme im Stator 28 exakt zu steuern.

**Fig. 2** zeigt in Vergrößerung einen Schnitt, gesehen längs der Linie II-II der Fig. 1. Wie man in Fig. 2 erkennt, sind die Magnete 38A bis 38H radial polarisiert. Der Magnet 38A hat außen einen Südpol S, innen einen Nordpol N. Der im Uhrzeigersinn nächste Magnet 38B hat außen einen Nordpol N und innen einen Südpol S, etc., wie aus der Zeichnung ersichtlich.

Das Statorblechpaket 27 hat außen einen Rückschluss (armature) 120, von dem zwölf Zähne 122A bis 122L radial nach innen ragen, die in der dargestellten Weise mit verbreiterten Zahnköpfen 124 versehen sind, zwischen denen sich Nuten 126 befinden. Die Nutteilung zwischen zwei benachbarten Statornuten 126 ist mit ts bezeichnet und beträgt hier

$$\tau_S = 360/12 = 30° \text{ mech.} \qquad \qquad ...(1)$$

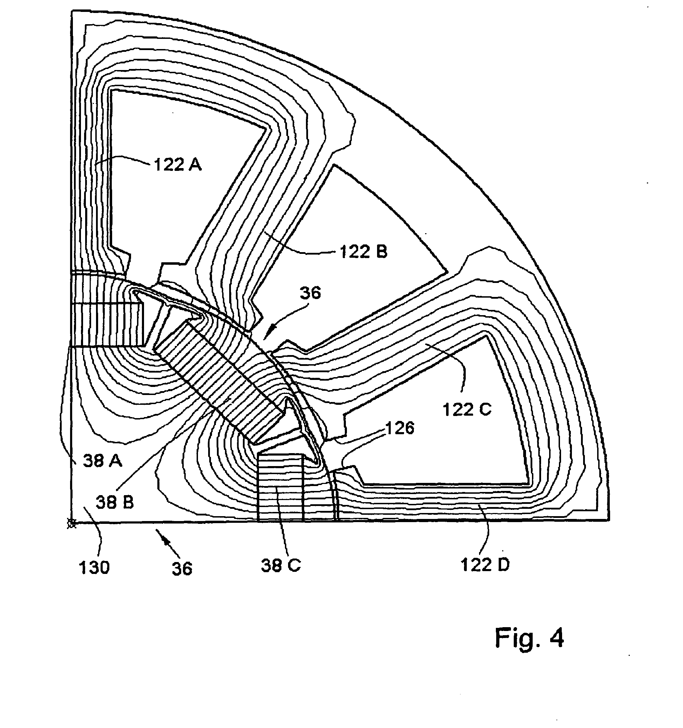

Es wurde überraschend gefunden, dass die Form der Rotorpole in einer bestimmten Relation zu $t_S$ stehen sollte. Dies wird weiter unten bei den Fig. 3 und 4 und anhand der Gleichungen (4) und (5) erläutert.

Die Zähne 122 sind mit konzentrierten Wicklungen bewickelt. Dargestellt ist das beispielhaft für die Phase U. Diese Phase beginnt mit einer konzentrierten Wicklung 128G auf dem Zahn 122G, setzt sich fort in einer konzentrierten Wicklung 128D auf dem Zahn 122D, ferner in einer Wicklung 128A auf dem Zahn 122A, und einer Wicklung 128J auf dem Zahn 122J. Von dort geht der Strang U zurück zum Sternpunkt 0, falls eine Wicklung in Sternschaltung verwendet wird. Naturgemäß ist auch eine Dreieckschaltung möglich.

Die Teilwicklungen 128G, 128D, 128A und 128J können auch parallel geschaltet sein, z.B., falls der Motor 20 aus einer Gleichstromquelle mit niedriger Spannung betrieben wird, da man dann Wicklungsstränge mit niedriger Induktivität und niedrigem ohmschem Widerstand erhält.

Die Wicklungsstränge V und W sind in Fig. 2 nur angedeutet, da für den Fachmann klar ist, dass diese die gleiche Topologie haben, aber um 22,5° mech. (Strang V) bzw. 45° mech. (Strang W) entgegen dem Uhrzeigersinn versetzt sind.

Bei der vorliegenden Erfindung wird angestrebt, dass in den einzelnen Strängen U, V, W sinusförmige Spannungen induziert werden, wenn sich der Rotor 36 dreht. Man spricht deshalb auch von einem Sinusmotor, wobei in die Stränge U, V und W sinusförmige Ströme eingeprägt werden.

Der Aufbau des Rotors 36 wird anhand der **Fig. 3** erläutert, die einen vergrößerten Ausschnitt aus Fig. 2 zeigt.

Die Welle 40 ist dort nicht dargestellt, da sie aus ferromagnetischem Werkstoff besteht und einen Teil des magnetischen Kreises im Rotor 36 bildet.

Der Rotor 36 hat in seiner Mitte einen magnetischen Rückschluss 130, der in der üblichen Weise als Blechpaket aus gestanzten Blechen aufgebaut ist. Dieses Blechpaket wird bevorzugt in der gleichen Weise aufgebaut, wie das in der WO 03/081748 A1, Fig. 2 bis 8, ausführlich dargestellt und beschrieben ist. Auf den Inhalt dieser WO-Veröffentlichung wird der Kürze halber ausdrücklich Bezug genommen.

Mit dem Rückschluss 130 sind über gestanzte, radial verlaufende schmale Halteteile 132 und mit diesen verbundene, in Umfangsrichtung verlaufende Halteteile 134a, 134b Polstücke 136A, 136B, 136C etc. verbunden. Die Symmetrieachse des Polstücks 136B ist mit 137 bezeichnet.

Die Polstücke 136 haben jeweils auf ihrer dem Rückschluss 130 zugewandten Seite eine Grenzfläche 138A, 138B, 138C, die im Folgenden auch als Magnet-Polschuh-Grenze bezeichnet wird und der mit einem Abstand D und parallel eine Grenzfläche 140A, 140B, 140C gegenüber liegt. Statt eines einzigen Magneten 38 könnte man diesen auch in mehrere Teile aufteilen, wie das dem Fachmann bekannt ist.

Zwischen diesen Grenzflächen 138, 140 sind die bereits beschriebenen Permanentmagnete 38A, 38B, 38C eingefügt, die jeweils einen rechteckförmigen Querschnitt haben und deren Magnetisierung insbesondere aus Fig. 4 klar hervorgeht.

Wie Fig. 3 zeigt, hat ein Magnet 38 an seiner Magnet-Polschuh-Grenzfläche 138 eine Winkelerstreckung $\beta_M$, und diese Winkelerstreckung entspricht derjenigen des an ihn anliegenden Polschuhs 136. Geht man von dieser Magnet-Polschuh-Grenze 138 in radialer Richtung nach außen, so nimmt die Breite $\beta$ des Polschuhs 136 längs einer etwa kontinuierlichen Übergangszone 139 ab und erreicht an einer Stelle 142 ihre kleinste Breite $\beta_C$, die kleiner ist als $\beta_M$, wie aus Fig. 3 hervorgeht.

Radial außerhalb der Stelle 142 geht der Polschuh 136 seitlich in die peripher verlaufenden Halteteile 134a, 134b über, die im Betrieb magnetisch gesättigt sind, also im Rahmen der vorliegenden Erfindung hauptsächlich eine mechanisch tragende Funktion haben. Wie man aus Fig. 3 besonders gut erkennt, haben die Polschuhe 136 in Verbindung mit den Halteteilen 134 etwa die Form eines in den USA gebräuchlichen Doktorhuts, und dies stellt eine bevorzugte Form dieser Polschuhe dar.

Wie man in Fig. 3 ferner erkennt, ist die radial äußere Seite 144 eines Polschuhs 136 so ausgebildet, dass im Luftspalt 39 eine etwa sinusförmige Flussverteilung entsteht, d.h. der Durchmesser nimmt, ausgehend von der Mitte eines Rotorpols, in der dargestellten Weise nach beiden Seiten hin ab.

Auf beiden Seiten eines Dauermagneten 38, bezogen auf die Umfangsrichtung, befindet sich also jeweils ein Hohlraum 146a, 146b, dessen Querschnittsform etwa einem rechtwinkligen Dreieck gleicht, bei dem die längste Seite etwas eingedellt ist, weil dort ein radial äußeres Eck des Dauermagneten 38 etwas in diesen Hohlraum 146 hineinragt.

In Fig. 3 ist auch die Polteilung τp des Rotorpols 136B eingetragen. Da der Rotor 36 acht Pole 136 hat, entspricht eine Polteilung

$$\tau p = 360°/8 = 45° \; mech \qquad\qquad ...(2)$$

Wie ebenfalls in Fig. 3 eingetragen, hat ein Dauermagnet 38 an seiner inneren Grenzfläche 140 eine innere Magnetbreite $\beta_{Mi}$ von etwa 41 ° mech., also von ca. 91 % einer Polbreite $\tau_p$, d.h. der Magnet 38 erstreckt sich praktisch bis zum Halteteil 132, und das Volumen der Magnete 38 ist folglich groß.

Im Normalfall wäre eine solche Rotor-Topologie sehr ungünstig und würde zu einer eher rechteckförmigen Flussverteilung im Luftspalt 39 und einem hohen Rastmoment führen. Durch die Einschnürung 142 der Polschuhe 136 mit dem Winkel $\beta_C$, der kleiner ist als $\beta_M$, erhält man jedoch eine Flussverteilung, die sehr gut an die Sinusform angenähert ist.

Hierzu wird hingewiesen auf **Fig. 4**, welche die Verteilung der Flusslinien zeigt.

Wie man z.B. beim Magnet 38B sieht, geht an seinen beiden Seiten, bezogen auf die Umfangsrichtung, ein Teil des Flusses durch die Hohlräume 146 (Fig. 3) im Bereich der Verengungen 142, wobei diese Hohlräume wie ein zusätzlicher Luftspalt wirken, also wie ein zusätzlicher magnetischer Widerstand, und da sich ein Hohlraum 146 jeweils in Richtung weg von der Engstelle 142 in Umfangsrichtung erweitert, nimmt auch der magnetische Widerstand in Richtung weg von dieser Stelle 142 (Fig. 3) in Umfangsrichtung zu. Man erhält dadurch die aus Fig. 4 ersichtliche, im wesentlichen sinusförmige Flussverteilung, d.h. die Verengungen 142 bewirken einerseits eine Konzentration des magnetischen Flusses auf die Polmitte, und wirken andererseits als magnetische Widerstände, die auch im Bereich der Pollücken der Rotorpole 136 einen kleinen magnetischen Fluss ermöglichen, wie er für eine sinusförmige Flussverteilung erwünscht ist. Durch entsprechende Dimensionierung der Hohlräume 146 kann man diesen seitlichen Fluss "titrieren".

Dabei hat es sich als wichtig für die Größe des Rastmoments erwiesen, dass der Winkel $\beta_C$ (Fig. 3) maximal die Größe des Winkels einer Nutteilung τs hat, bevorzugt aber kleiner ist als dieser. Beim dargestellten Ausführungs-

beispiel beträgt

$$\tau S = 360/12 = 30° \text{ mech.} \qquad ...(3)$$

und der Winkel $\beta_C$ beträgt etwa 27° mech., also ca. 90 % von $\tau_S$. Es hat sich gezeigt, dass für $\beta_C$ bei einer konzentrierten Wicklung etwa folgende Beziehung gelten sollte:

$$\beta C = \tau S * m \qquad ...(4)$$

wobei m = 0,8...1,0,
und alle Winkel in mechanischen Graden gemessen werden.
Wird eine verteilte Wicklung verwendet, so lautet die Gleichung

$$\beta C = \tau S * m * n \qquad ...(5),$$

wobei
m = 0,8...1,0 und
n =1,2, 3,...
Bevorzugt liegt m zwischen 0,8 und 0.98
Es hat sich gezeigt, dass auf diese Weise, insbesondere bei Verwendung von konzentrierten Wicklungen, eine sehr gute Sinusform der induzierten Spannung erzielt werden kann, in Verbindung mit einem akzeptablen Rastmoment. Die erhebliche Breite $\beta_{Mi}$ der Magnete 38 ermöglicht dabei eine entsprechende Verkleinerung des Motors 20, verglichen mit bisherigen Versionen. Bei einem ausgeführten Muster ergab sich z.B. eine Verkürzung des Motors von bisher 68 auf jetzt 50 mm bei gleicher Leistung. (In der Praxis können sich naturgemäß differierende Werte ergeben.)

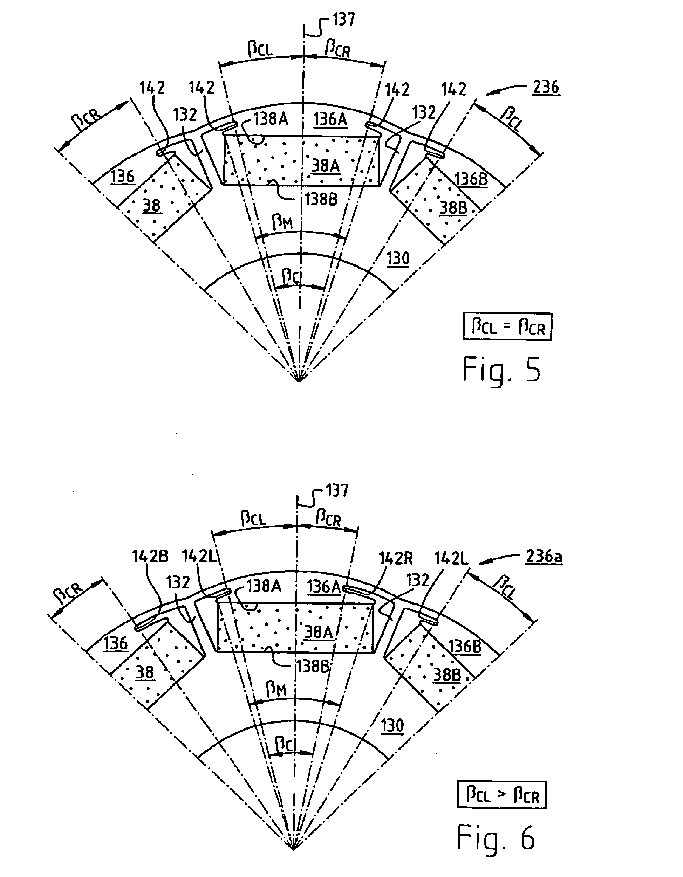

Die Fig. 5 und 6 zeigen eine Darstellung analog Fig. 3. Die Statorzähne 122A bis 122D sind in Fig. 5 und 6 nicht dargestellt und stimmen mit Fig. 3 überein.
**Fig. 5** zeigt einen Sektor eines Rotorblechs 236, bei dem die Magnet 38, 38A und 38B angedeutet sind. Dieses Rotorblech 236 hat symmetrische Pole 136, 136A, 136B, weil die Verengungen 142 symmetrisch zu einer Symmetrielinie 137 liegen, wie das auch in den Fig. 2 bis 4 dargestellt ist.
**Fig. 6** zeigt davon abweichend einen Sektor einer ersten Variante eines Rotorblechs 236a, bei dem die Ausnehmungen 138A, 138B für die Rotormagnete 38, 38A, 38B mit den entsprechenden Ausnehmungen der Fig. 5 übereinstimmen, aber die Einschnürungen 42L auf der linken Seite eines Rotorpols (z. B. 136A) sind bei Fig. 6 kürzer als die Verengungen 142R auf der rechten Seite dieses Pols.
Dadurch bleibt zwar die Größe des Winkels $\beta_C$ gegenüber Fig. 5 unverändert, aber der Winkel $\beta_{CL}$ zwischen der Symmetrielinie 137 und der linken Verengung 142L ist größer als der Winkel $\beta_{CR}$ zwischen der Symmetrielinie 137 und der rechten Verengung 142R, so dass gilt:

$$\beta_{CL} > \beta_{CR} \qquad ... (6)$$

Umgekehrt kann man bei einer zweiten Version mit (nicht dargestellten) Blechen 236b in gleicher Weise $\beta_{CR}$ größer machen als $\beta_{CL}$, was nicht dargestellt ist. Dies geschieht einfach durch Invertieren des in Fig. 6 dargestellten Blechs 236a, so dass dessen Unterseite nach oben kommt.
Wenn man nun ein Rotorblechpaket in der Weise herstellt, dass man z. B. zuerst ein symmetrisches Blech 236 gemäß Fig. 5 verwendet, darauf ein unsymmetrisches Blech 236a gemäß Fig. 6, darauf ein unsymmetrisches Blech 236b (invertiertes Blech 236a), darauf wieder ein Blech 236, dann 236a, etc., so ergibt sich eine bessere Form der Spannung, welche in der (nicht dargestellten) Statorwicklung induziert wird, und man erhält durch diese einfache Maßnahme folglich ein gleichmäßigeres Drehmoment.
Zu beachten ist, dass die Öffnungen 138A, 138B für die Magnete 38 bei allen Blechen 236, 236a, 236b die gleiche Lage haben, so dass auch die Symmetrielinien 137 bei allen Blechen übereinstimmen.
Naturgemäß sind im Rahmen der vorliegenden Erfindung vielfache Abwandlungen und Modifikationen möglich wie in den Ansprüchen definiert.

**Patentansprüche**

1. Elektromotor, welcher aufweist:

   Einen Stator (28) mit einem mit Nuten (126) versehenen Statorblechpaket, dessen Nuten eine vorgegebene Nutteilung τS aufweisen;
   eine in diesen Nuten (126) angeordnete mehrphasige Statorwicklung (U, V, W);
   einen vom Stator (28) durch einen Luftspalt (39) getrennten Rotor (36), welcher auf seiner dem Luftspalt (39) zugewandten Seite eine Mehrzahl von ausgeprägten Polen mit dem Luftspalt (39) zugewandten Polschuhen (136) und auf seiner vom Luftspalt (39) abgewandten Seite einen magnetischen Rückschluss (130) aufweist, welcher durch Halteabschnitte (134a, 134b) mechanisch mit den Polschuhen (136) verbunden ist, welch letztere zur Erzeugung mindestens einer sinusförmigen induzierten Spannung in der Statorwicklung (U, V, W) dienen;
   eine zwischen dem magnetischen Rückschluss (130) und einem Polschuh (136) vorgesehene Ausnehmung (138, 140), in welcher zur Erzeugung eines magnetischen Flusses in diesem Polschuh (136) mindestens ein Permanentmagnet (38) angeordnet ist, so dass am Übergang von diesem Permanentmagneten zum zugeordneten Polschuh eine Magnet-Polschuh-Grenze definiert wird, und an welche Ausnehmung sich auf jeder Seite des mindestens einen Permanentmagneten (38) etwa in Umfangsrichtung ein magnetisch schlecht leitender Bereich (146a, 146b) anschließt, der auf seiner dem Luftspalt (39) zugewandten Seite an einen der Halteabschnitte (134a, 134b) angrenzt;
   wobei die in Umfangsrichtung gemessene Breite β eines Polschuhs (136) mindestens bereichsweise in Richtung weg von der Magnet-Polschuh-Grenze (138) zum Luftspalt (39) hin abnimmt und an der Stelle der geringsten Breite (142) eine Winkelerstreckung $\beta_c$ hat, **dadurch gekennzeichnet, dass** diese Winkelerstreckung $\beta_C$ zur Nutteilung $\tau_s$ der Statornuten (126) in folgender Beziehung steht:

$$\beta_C = \tau_s * m * n,$$

   wobei m = 0,8 ... 1,0 ist,
   und n = 1 oder n = 3, 4, ... ist,
   und die Winkel $\beta_c$ und $\tau_s$ in mechanischen Graden angegeben sind.

2. Elektromotor nach Anspruch 1, welcher als Außenläufermotor ausgebildet ist.

3. Elektromotor nach Anspruch 1, bei welchem die in Umfangsrichtung gemessene Breite ($\beta M$) eines Polschuhs (136) an der Magnet-Polschuh-Grenze (138) größer ist als seine Breite ($\beta C$) an der Stelle (142), an welcher diese Breite am kleinsten ist.

4. Elektromotor nach Anspruch 3, bei welchem der Übergang von der Stelle (138) größerer Breite ($\beta M$) eines Polschuhs (136) zur Stelle (142) kleinster Breite ($\beta C$) im wesentlichen als kontinuierliche Übergangszone (139) ausgebildet ist.

5. Elektromotor nach Anspruch 4, bei welchem die kontinuierliche Übergangszone (139) in Verbindung mit dem ihr gegenüber liegenden Halteabschnitt (134a, 134b) einen Hohlraum (146a, 146b) bildet, der sich in Umfangsrichtung weg vom zugeordneten Rotorpol (136) erweitert.

6. Elektromotor nach Anspruch 4, bei welchem der sich in Richtung weg vom zugeordneten Rotorpol (136) erweiternde Hohlraum (146a, 146b) für den Magnetfluss, der vom Permanentmagneten (38) zum Luftspalt (39) geht, einen in Richtung weg vom Rotorpol (136) zunehmenden magnetischen Widerstand bildet.

7. Elektromotor nach Anspruch 1, bei welchem die Polschuhe (136) im Wesentlichen symmetrisch zu einer Symmetrieachse (137) ausgebildet sind.

8. Elektromotor nach Anspruch 1, bei welchem die Polschuhe aus Blechen ausgebildet sind,
   und bei mindestens einem Teil dieser Bleche die Stelle geringster Erstreckung ($\beta C$) in Umfangsrichtung relativ zu einer gedachten Symmetrieachse (137) der Polschuhe versetzt ist.

9. Elektromotor nach Anspruch 1, bei welchem der mindestens eine
   Rotormagnet (38), welcher in der zwischen dem magnetischen Rückschluss (130) und dem Polschuh (136) vorgesehenen Ausnehmung angeordnet ist, auf seiner dem Rückschluss (130) zugewandten Seite eine Winkelerstreckung (βMi) aufweist, welche etwa 85 % oder mehr einer Polteilung ($\tau_p$) des Rotors (36) beträgt.

10. Elektromotor nach Anspruch 9, bei welchem die Winkelerstreckung (βMi) etwa 95 % einer Polteilung ($\tau_p$) des Rotors (36) beträgt.

11. Elektromotor nach Anspruch 1, bei welchem die Statorwicklung konzentrierte Wicklungen (128G, 128D) aufweist.

12. Elektromotor nach Anspruch 1, bei welchem ein Polschuh (136) des Rotors (36), im Querschnitt senkrecht zur Drehachse gesehen, ein Profil ähnlich wie ein amerikanischer Doktorhut aufweist.

**Claims**

1. Electric motor, which comprises:

    a stator (28) having a stator stack provided with slots (126), the slots of which have a predetermined slot pitch τs;
    a multiphase stator winding (U, V, W) arranged in the slots (126);
    a rotor (36) separated from the stator (28) by an air gap (39), which rotor (36) has, on its side facing the air gap (39), a plurality of salient poles with pole shoes (136) facing the air gap (39) and, on its side remote from the air gap (39), a magnetic armature (130) which is mechanically connected by holding sections (134a, 134b) to the pole shoes (136), the latter serving to generate at least a sinusoidal induced voltage in the stator winding (U, V, W);
    a recess (138, 140) provided between the magnetic armature (130) and a pole shoe (136), in which recess (138, 140) there is arranged at least one permanent magnet (38) for generating a magnetic flux in the pole shoe (136) so that a magnet/pole shoe boundary is defined at the transition from the permanent magnet to the associated pole shoe, which recess is adjoined on either side of the at least one permanent magnet (38), approximately in the circumferential direction, by a region (146a, 146b) with poor magnetic conductivity which, on its side facing the air gap (39), adjoins one of the holding sections (134a, 134b);
    wherein the width β of a pole shoe (136) measured in the circumferential direction decreases at least in some areas in the direction leading away from the magnet/pole shoe boundary (138) to the air gap (39) and
    at the point of the smallest width (142) has an angular extent βC, **characterised in that** the is related to the slot pitch τS of the stator slots (126) as follows:

$$\beta C = \tau s * m * n,$$

    wherein n = 1 or n = 3, 4, 5, ..., and wherein m = 0.8 ··· 1.0
    and wherein the angles βC and τS are given in mechanical degrees.

2. Electric motor according to claim 1, which is in the form of an internal-rotor motor.

3. Electric motor according to claim 1, in which the width (βM) of a pole shoe (136) measured in the circumferential direction is greater at the magnet/pole shoe boundary (138) than its width (βC) at the point (142) at which that width is smallest.

4. Electric motor according to claim 3, in which the transition from the point (138) of greater width (βM) of a pole shoe (136) to the point (142) of smallest width (βC) is substantially in the form of a continuous transition zone (139).

5. Electric motor according to claim 4, in which the continuous transition zone (139), in conjunction with the holding section (134a, 134b) located opposite it, forms a hollow space (146a, 146b) which widens in the circumferential direction leading away from the associated rotor pole (136).

6. Electric motor according to claim 4, in which the hollow space (146a, 146b) widening in the direction leading away from the associated rotor pole (136) forms a magnetic reluctance, which increases in the direction leading away from the rotor pole (136), for the magnetic flux passing from the permanent magnet (38) to the air gap (39).

**7.** Electric motor according to claim 1, in which the pole shoes (136) are substantially symmetrical to an axis of symmetry (137).

**8.** Electric motor according to claim 1, in which the pole shoes are formed of sheets of metal, and in at least some of those sheets the point of smallest extent ($\beta$C) in the circumferential direction is offset relative to an imaginary axis of symmetry (137) of the pole shoes.

**9.** Electric motor according to claim 1, in which the at least one rotor magnet (38), which is arranged in the recess provided between the magnetic armature (130) and the pole shoe (136), has, on its side facing the armature (130), an angular extent ($\beta$Mi) which is approximately 85% or more of a pole pitch ($\tau_p$) of the rotor (36).

**10.** Electric motor according to claim 9, in which the angular extent ($\beta$Mi) is approximately 95% of a pole pitch ($\tau_p$) of the rotor (36).

**11.** Electric motor according to claim 1, in which the stator winding has concentric windings (128G, 128D).

**12.** Electric motor according to claim 1, in which a pole shoe (136) of the rotor (36), when viewed in cross-section perpendicularly to the axis of rotation, has a profile similar to an American doctoral cap.

## Revendications

**1.** Moteur électrique, lequel présente :

un stator (28) avec un paquet de tôles statoriques pourvu d'encoches (126), dont les encoches présentent un pas d'encoches prédéfini $\tau_s$;
un enroulement statorique polyphasé (U, V, W) disposé dans ces encoches (126) ;
un rotor (36) séparé du stator (28) par un entrefer (39), lequel présente de son côté tourné vers l'entrefer (39) une pluralité de pôles saillants avec des pièces polaires (136) tournées vers l'entrefer (39) et de son côté éloigné de l'entrefer (39) une culasse magnétique (130), laquelle est reliée mécaniquement aux pièces polaires (136) par des portions de retenue (134a, 134b), les pièces polaires (136) servant à générer au moins une tension induite sinusoïdale dans l'enroulement statorique (U, V, W) ;
un évidement (138, 140) prévu entre la culasse magnétique (130) et une pièce polaire (136), dans lequel est disposé au moins un aimant permanent (38) pour générer un flux magnétique dans cette pièce polaire (136), de sorte qu'une limite aimant-pièce polaire est définie à la jonction de cet aimant permanent avec la pièce polaire associée, et auquel évidement se raccorde de chaque côté dudit au moins un aimant permanent (38), à peu près en direction circonférentielle, une zone mal conductrice magnétiquement (146a, 146b) qui est contiguë de son côté tourné vers l'entrefer (39) à une des portions de retenue (134a, 134b) ;
la largeur $\beta$, mesurée en direction circonférentielle, d'une pièce polaire (136) diminuant au moins en partie à l'opposé de la limite aimant-pièce polaire (138) et
vers l'entrefer (39) et a une extension angulaire $\beta_C$ à l'endroit de la plus faible largeur (142), **caractérisé en ce que** cette extension angulaire $\beta_C$ est dans la relation suivante avec le pas d'encoches $\tau_S$ des encoches statoriques (126) :

$$\beta_C = \tau_S * m * n,$$

dans laquelle m = 0,8 ... 1,0 et n= 1 ou n=3,4, ...
et les angles $\beta_C$ et $\tau_S$ sont indiqués en degrés mécaniques.

**2.** Moteur électrique selon la revendication 1, lequel est réalisé sous la forme d'un moteur à induit extérieur.

**3.** Moteur électrique selon la revendication 1, dans lequel la largeur ($\beta_M$) mesurée en direction circonférentielle d'une pièce polaire (136) à la limite aimant-pièce polaire (138) est plus grande que sa largeur ($\beta_C$) à l'endroit (142) où cette largeur est la plus petite.

**4.** Moteur électrique selon la revendication 3, dans lequel la jonction de l'endroit (138) de plus grande largeur ($\beta_M$)

d'une pièce polaire (136) avec l'endroit (142) de plus petite largeur ($\beta_C$) est réalisée essentiellement sous la forme d'une zone de jonction continue (139).

5. Moteur électrique selon la revendication 4, dans lequel la zone de jonction continue (139) forme en liaison avec la portion de retenue (134a, 134b) lui faisant face une cavité (146a, 146b) qui s'élargit en direction circonférentielle à l'opposé du pôle rotorique (136) associé.

6. Moteur électrique selon la revendication 4, dans lequel la cavité (146a, 146b) qui s'élargit à l'opposé du pôle rotorique (136) associé forme une résistance magnétique qui augmente à l'opposé du pôle rotorique (136) pour le flux magnétique qui va de l'aimant permanent (38) à l'entrefer (39).

7. Moteur électrique selon la revendication 1, dans lequel les pièces polaires (136) sont formées essentiellement symétriquement par rapport à un axe de symétrie (137).

8. Moteur électrique selon la revendication 1, dans lequel les pièces polaires sont formées de tôles, et pour au moins une partie de ces tôles, l'endroit de plus faible extension ($\beta_C$) est décalé en direction circonférentielle par rapport à un axe de symétrie imaginaire (137) des pièces polaires.

9. Moteur électrique selon la revendication 1, dans lequel ledit au moins un aimant de rotor (38) qui est disposé dans l'évidement prévu entre la culasse magnétique (130) et la pièce polaire (136) présente de son côté tourné vers la culasse magnétique (130) une extension angulaire ($\beta_{MI}$) qui est égale à environ 85 % ou plus d'un pas d'encoches ($\tau_S$) du rotor (36).

10. Moteur électrique selon la revendication 9, dans lequel l'extension angulaire ($\beta_{MI}$) est égale à environ 95 % d'un pas d'encoches ($\tau_S$) du rotor (36).

11. Moteur électrique selon la revendication 1, dans lequel l'enroulement statorique présente des enroulements concentrés (128G, 128D).

12. Moteur électrique selon la revendication 1, dans lequel une pièce polaire (136) du rotor (36) présente, vue en section perpendiculairement à l'axe de rotation, un profil analogue à un chapeau de docteur américain.

Fig. 1

Fig. 2

Fig. 3

Fig. 4

$\beta_{CL} = \beta_{CR}$

Fig. 5

$\beta_{CL} > \beta_{CR}$

Fig. 6

**EP 1 530 281 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020171309 A1
- WO 03081748 A1